# FASCICULE DE BREVET EUROPEEN

(11) **EP 2 911 867 B1**
(45) Date de publication et mention de la délivrance du brevet: **23.11.2016**
(21) Numéro de dépôt: 13789870.6
(22) Date de dépôt: 21.10.2013
(51) Int. Cl.: B29C 70/48, B29C 67/24

(54) **PROCÉDÉ DE FABRICATION D'UNE PIÈCE COMPOSITE THERMOPLASTIQUE EN MOULE FERME, AVEC INJECTION DANS UN MOULE FROID**
VERFAHREN ZUR HERSTELLUNG EINES THERMOPLASTISCHEN VERBUNDTEILS IN EINER GESCHLOSSENEN FORM MIT INJEKTION IN EINE KALTE FORM
PROCESS FOR MANUFACTURING A THERMOPLASTIC COMPOSITE PART IN A CLOSED MOULD, WITH INJECTION INTO A COLD MOULD

(30) Priorité: 23.10.2012 FR 1260096
(43) Date de publication de la demande: 02.09.2015
(73) Titulaire: Arkema France, 92700 Colombes (FR); Le Pole De Plasturgie De L'Est, 57500 Saint Avold (FR)
(72) Inventeur: HOCHSTETTER, Gilles, 94240 L'Hay les Roses (FR); CAUCHOIS, Jean-Pierre, 67510 Obersteinbach (FR); PERRIN, Camille, 57420 Pontoy (FR); PERRIN, Henri, 57340 Brehain (FR); GLOTIN, Michel, 92210 Saint-Cloud (FR)
(74) Mandataire: Killis, Andréas
(86) Numéro de dépôt international: PCT/FR2013/052510
(87) Numéro de publication internationale: WO 2014/064377

(56) Documents cités:
- EP-A1- 0 174 225
- EP-A1- 2 586 585
- WO-A1-2011/073198
- DE-B3-102011 014 538
- US-B2- 6 750 316

## Description

L'invention concerne un procédé spécifique de fabrication en moule fermé, en particulier par voie de moulage RTM, injection-compression ou S-RIM, d'une pièce de matériau composite thermoplastique à base de polymère thermoplastique, de préférence semi-cristallin et, plus particulièrement, de polyamide semi-cristallin de Tg élevée avec un cycle de moulage réduit et une productivité améliorée.

La fabrication d'une pièce de composite thermoplastique à base d'un polyamide semi-cristallin par une technique de moulage en moule fermé, en particulier par moulage RTM, même en utilisant une composition précurseur dudit polyamide à base de prépolymères réactifs qui facilite ainsi l'imprégnation du renfort fibreux, n'empêche pas quelques problèmes supplémentaires particuliers qui rendent cette fabrication plus compliquée, problèmes qui sont à résoudre afin d'améliorer le cycle de fabrication, par conséquent la productivité globale du moulage. Ceci est lié essentiellement au fait que, pour des composites thermoplastiques mécaniquement performants, des températures élevées de mise en oeuvre sont nécessaires, en particulier d'injection à l'état fondu et de moulage en moule fermé. Compte tenu de la nécessité de refroidissement de la pièce finale moulée pour permettre son démoulage et manipulation sans risque de déformation lors du démoulage ou de sa manipulation, des cycles de chauffage-refroidissement répétitifs longs en durée sont nécessaires, la productivité en est affectée ; en outre ces cycles sont très consommateurs d'énergie. Ce problème est encore plus particulier dans le cas de polymères thermoplastiques dont la matrice finale est semi-cristalline, en particulier polyamide, avec des températures de fusion élevées et souvent supérieures à 300°C pour le polymère final ou pour les prépolymères réactifs semi-cristallins utilisés comme précurseurs, en particulier comprenant une structure aromatique et/ou cycloaliphatique. Ceci impose donc des températures de transformation beaucoup plus élevées, ce qui impose des cycles thermiques de chauffage et de refroidissement de forte amplitude et par suite, une gestion de ces cycles plus compliquée et coûteuse sur le plan énergétique. C'est encore plus problématique si l'on souhaite réaliser ce type de cyclage rapidement. Or, le temps de cycle est un des facteurs prépondérant dans le choix des solutions de moulage au plan industriel.

WO2011/073198 décrit un procédé de fabrication d'un article composite polyamide par moulage par injection, utilisant un polyamide de haute fluidité pour une imprégnation améliorée du matériau de renfort sous forme d'étoffe de tissus industriels.

EP0174225 décrit un procédé de fabrication de polymères consistant à faire réagir entre eux un oligomère polyamide monoamine primaire ou α-ω diamine primaire ou secondaire ou α-ω diacide ou α-amine primaire ω-acide avec un composé polyépoxydé.

US6750316 décrit un procédé pour augmenter la masse moléculaire d'un polyester, copolyester, polyamide, copolyamide ou mélange lequel procédé cosist à mélanger à l'état fondu ledit polyester, copolyester, polyamide, copolyamide ou mélange avec une bisoxazoline ou avec le carbonyl dilactame.

La solution proposée par la présente invention est un procédé de fabrication de pièce composite en moule fermé et, en particulier, un procédé de moulage de type RTM (Resin Transfer Molding ou résine transfert moulage) ou par injection-compression ou S-RIM (structural reaction injection molding ou réaction injection moulage structural) utilisant un polymère thermoplastique comme matrice du composite, de préférence semi-cristallin et plus particulièrement polyamide (PA) semi-cristallin, préférentiellement de haute Tg, c'est-à-dire d'au moins 90°C, en particulier obtenu à partir d'une composition réactive p) précurseur dudit polymère, à base de prépolymères réactifs, de préférence prépolymères réactifs semi-cristallins. Cette solution a comme particularité d'injecter le produit (composition précurseur réactive p)) à une température d'injection, T1, supérieure à la température T2 du moule. Selon cette solution de l'invention, T2 est la température de régulation du moule et elle est maintenue constante pendant tout le cycle de moulage : en ce sens, le procédé de moulage peut être considéré comme isotherme. Plus particulièrement, lorsque le polymère constituant la matrice du composite est amorphe, la température T2 de régulation du moule doit être inférieure à la température de distorsion à la chaleur HDT (Heat Distorsion Temperature) dudit matériau composite telle que mesurée selon la norme ISO R 75 A. Plus préférentiellement, dans le cas où ledit polymère constituant la matrice du composite est semi-cristallin, ladite température T2 de régulation du moule est inférieure à la température de cristallisation Tc dudit polymère, encore plus préférentiellement, elle est comprise entre Tc et Tc -20°C et encore mieux entre Tc -5°C et Tc -15°C.

Juste avant l'injection du mélange réactif dans le moule, la paroi interne du moule est réchauffée par un moyen de chauffage externe et amovible à une température T3 comprise entre T1 -40°C et T1 +40°C où T1 est la température d'injection du mélange réactif. Ce moyen de chauffage peut être de type inductif ou résistif ou utilisant des infra rouges ou des micro-ondes : le dispositif est alors introduit dans le moule ouvert puis retiré pour permettre la fermeture du moule avant l'injection du mélange réactif (composition réactive p). Plus préférentiellement, le chauffage peut se faire par injection d'un fluide gaz chaud, comme l'air chaud, dans le moule avant l'injection de la composition réactive p) (ou résine), le temps d'injection étant typiquement inférieur à 10 s, le temps de maintien dans le moule étant typiquement inférieur à 30 s et sa température de surface interne (paroi) T3 étant comprise entre T1 -50°C et T1 +50°C. Avant l'injection de la résine, ledit fluide tel que l'air chaud est chassé du moule par purge, par exemple, par mise sous vide dudit moule par la présence éventuelle d'un évent ou en laissant ledit moule entre ouvert. Encore plus préférentiellement, on utilisera comme fluide gaz de l'azote à la place de l'air ou un autre gaz inerte de façon à éviter d'oxyder le renfort fibreux qui a été disposé dans le moule avant l'injection de la résine. En utilisant comme fluide (gaz) chaud de l'azote chaud à la place de l'air chaud, il s'agit également d'éviter une dégradation, par thermoxydation, de l'ensimage des fibres de renfort. Rapidement après l'injection, c'est-à-dire quand la température T4 de la pièce dans le moule est partout égale à ladite température régulée isotherme T2 dudit moule, on démoule la pièce composite. Si au moment du démoulage, la polymérisation de la matrice du composite n'est pas suffisante, on la poursuit dans une étape séparée de recuit en étuve. Cette opération peut se faire en temps masqué par rapport au cycle de moulage de la pièce et, ainsi, n'affecte pas négativement le temps de cycle de moulage. Le cycle de moulage se trouve ainsi amélioré par la réduction de sa durée, de préférence avec une durée de cycle de moins de (inférieure à) 10 min, de préférence ne dépassant pas 5 min et, encore plus préféré, de moins de 2 min.

Plus particulièrement, la solution de la présente invention remédiant aux inconvénients cités est donc un procédé spécifique en moule fermé comportant une imprégnation d'un renfort fibreux sec placé dans ledit moule fermé, par injection à l'état fondu d'une composition réactive p) à base de prépolymères PA semi-cristallins réactifs, plus particulièrement comprenant une structure aromatique et/ou cycloaliphatique, ladite composition étant précurseur dudit polymère thermoplastique (de matrice) et une étape de polymérisation au moins partielle et simultanée, par polycondensation ou polyaddition, avec comme spécificité une température T2, de régulation constante ou en isotherme dudit moule, inférieure à la température T1, d'injection de ladite composition réactive p), T1 étant inférieure à la HDT dudit composite, mesurée selon la norme ISO R 75 A, et de préférence supérieure à HDT +100°C si ladite matrice est amorphe et T1 étant supérieure à la température Tf de fusion du polymère de la matrice si ce dernier est semi-cristallin. Plus particulièrement, dans le cas d'un polymère semi-cristallin, T2 est maintenue à une valeur comprise entre Tc et Tc -20°C où Tc est la température de cristallisation de ce polymère. Dans une version encore plus préférée, T2 est comprise entre Tc -5°C et Tc -15°C.

Le premier objet et objet principal de la présente invention concerne donc un procédé de fabrication d'une pièce de matériau composite thermoplastique comprenant un renfort fibreux et une matrice de polymère thermoplastique, de préférence semi-cristallin, plus préférentiellement polyamide semi-cristallin, de température de fusion Tf inférieure à 320°C, de préférence inférieure à 300°C et, plus préférentiellement, inférieure à 280°C, plus particulièrement entre 200 et 280°C. Dans une autre version préférée, le polymère constituant la matrice du composite peut présenter une température de transition vitreuse Tg d'au moins 90°C, de préférence d'au moins 100°C, plus préférentiellement d'au moins 110°C, encore plus préférentiellement d'au moins 120°C. Dans une version encore plus préférée, le polymère constituant la matrice du composite peut être semi-cristallin et ayant une température de transition vitreuse Tg d'au moins 90°C, de préférence d'au moins 100°C, plus préférentiellement d'au moins 110°C, encore plus préférentiellement d'au moins 120°C.

Donc, le premier objet et objet principal de l'invention concerne un procédé de fabrication d'une pièce de matériau composite thermoplastique comprenant un renfort fibreux et une matrice thermoplastique constituée d'un polymère thermoplastique, de préférence polymère thermoplastique semi-cristallin, plus préférentiellement à base d'un polyamide semi-cristallin et, en particulier, ayant une température de fusion Tf inférieure à 320°C, de préférence Tf inférieure à 300°C, plus préférentiellement Tf inférieure à 280°C et ladite matrice imprégnant ledit renfort fibreux, ledit procédé comprenant :
a) une étape d'imprégnation dudit renfort fibreux, sec et prédisposé dans ledit moule fermé par injection sur ledit renfort à une température d'injection T1 supérieure à la température de distorsion à la chaleur HDT, dudit matériau composite, mesurée selon la norme ISO R 75 A, lorsque sa matrice est constituée d'un polymère amorphe et de préférence, T1 étant supérieure à HDT +100°C et dans le cas où la matrice dudit composite est constituée d'un polymère thermoplastique semi-cristallin, T1 étant supérieure à la température de fusion Tf dudit polymère, d'une composition réactive p) liquide, à l'état fondu, de préférence ayant une viscosité à ladite température d'injection T1 inférieure à 50 Pa.s, de préférence inférieure à 10 Pa.s, et plus préférentiellement inférieure à 5 Pa.s, ladite composition réactive p) étant précurseur dudit polymère thermoplastique, et à base de, ou comprenant au moins un prépolymère réactif dudit polymère thermoplastique, avec
   - la température T2 de régulation dudit moule fermé étant maintenue à une valeur constante (isotherme) durant (tout) le moulage, inférieure à ladite HDT dudit matériau composite, lorsque sa matrice est amorphe et lorsque cette matrice est semi-cristalline, ladite température T2 étant comprise entre Tc et Tc -20°C, avec Tc étant la température de cristallisation dudit polymère de matrice, et de préférence T2 étant (maintenue et) comprise entre Tc -5°C et Tc -15°C,
   - la surface interne dudit moule étant réchauffée juste avant l'injection de ladite composition réactive p) dans ledit moule à une température T3, comprise entre T1 -50°C et T1 +50°C,
      - ledit réchauffage de surface interne (dudit moule) étant réalisé juste avant l'injection de ladite composition réactive p) par un moyen de chauffage externe au moule et amovible,
         et de préférence,
      - ledit moyen de chauffage externe utilisant des infra rouges ou des micro-ondes ou étant résistif ou inductif et étant alors introduit dans ledit moule en position ouverte, puis retiré pour permettre la fermeture du moule et l'injection de la dite composition réactive p),
      - ou (de préférence) ledit moyen de chauffage externe étant basé sur le soufflage d'un fluide gaz chaud, de préférence d'air chaud, plus préférentiellement d'azote ou d'un autre fluide gaz inerte (non oxydant) chaud, dans le moule en position fermée, en particulier la température dudit fluide (gaz) chaud étant comprise entre T1 -50°C et T1 +50°C, et plus particulièrement le temps d'injection dudit fluide gaz chaud étant inférieur à 30 s, de préférence inférieur à 10 s, et encore plus particulièrement avec le temps de maintien dudit fluide gaz chaud dans ledit moule étant inférieur à 1 minute, de préférence inférieur à 30 s, ledit moule étant ensuite purgé dudit fluide gaz chaud, avant l'introduction de ladite composition réactive p),
b) une étape de polymérisation au moins partielle de ladite composition p) réactive par polycondensation ou par polyaddition suivant le cas, et moulage, avec l'étape de polymérisation étant simultanée avec l'étape d'imprégnation a) et avec ledit moulage,
c) démoulage de ladite pièce dès que la température de ladite pièce T4 est égale à ladite température de régulation T2 en isotherme dudit moule, avec la polymérisation de ladite composition précurseur p) étant éventuellement partielle,
d) éventuellement et si nécessaire, poursuite de la polymérisation de ladite pièce dans une étape séparée et hors moule, par recuit dans une étuve, de préférence à une température de recuit Tr inférieure à HDT dudit matériau, pour polymère (matrice) amorphe et Tr étant inférieure à la température de fusion Tf dans le cas d'un polymère (matrice) semi-cristallin et plus particulièrement dans le cas d'un polymère semi-cristallin, ladite température Tr étant située entre Tf et Tf -30°C.

Ladite purge dudit fluide gaz chaud, injecté dans ledit moule pour permettre ledit réchauffage de la surface (paroi) interne dudit moule à ladite température T3, avant injection de ladite composition réactive p), peut être réalisée par exemple, par la mise sous vide dudit moule suivie de l'injection sous vide (moule maintenu sous vide) de ladite composition réactive p). Elle peut être également réalisée à travers un évent par la présence d'un tel évent dans le moule ou en laissant ledit moule entre-ouvert un court instant avant refermeture et injection de ladite composition réactive.

Ladite composition réactive p) peut être définie selon deux options p1) et p2) comme suit :
- p1) une composition précurseur monocomposante p11) ou bicomposante p12), ladite composition monocomposante p11) étant à base d'un prépolymère réactif thermoplastique p11), de préférence semi-cristallin et plus préférentiellement prépolymère réactif polyamide semi-cristallin, réactif sur lui-même, de préférence par polycondensation et ladite composition bicomposante p12), étant à base de deux prépolymères réactifs thermoplastiques p121) et p122), de préférence semi-cristallins, plus préférentiellement prépolymères réactifs polyamides semi-cristallins, réactifs entre eux, de préférence par polycondensation ou polyaddition,
- p2) une composition bicomposante comprenant un prépolymère réactif thermoplastique p21), de préférence semi-cristallin, plus préférentiellement prépolymère réactif polyamide semi-cristallin et un allongeur de chaîne p22) non polymérique, porteur de groupements réactifs avec ceux dudit prépolymère p21) et avec p21) et p22) étant réactifs par réaction de polyaddition.

Comme exemples de polymères thermoplastiques convenables (amorphes et semi-cristallins) comme matrice thermoplastique dans la présente invention, on peut citer : polyamides, en particulier comprenant une structure aromatique et/ou cycloaliphatique, y compris copolymères par exemple copolymères polyamides-polyéthers, polyesters en particulier comprenant une structure aromatique et/ou cycloaliphatique, polyaryléthercétones (PAEK), polyétheréther cétones (PEEK), polyéthercétone cétones (PEKK), polyéthercétoneéthercétone cétones (PEKEKK), polyphénylsulfures (PPS), polyimides en particulier polyétherimides (PEI) ou polyamide-imides, polylsulfones (PSU) en particulier polyarylsulfones tels que les polyphényl sulfones (PPSU), polyéthersulfones (PES), PMMA, PVDF, et de préférence polyamides et leurs copolymères, plus particulièrement comprenant une structure aromatique et/ou semi-aromatique et de préférence semi-cristallins.

Comme exemples convenables de polymères thermoplastiques semi-cristallins, on peut citer les polyamides (en particulier comprenant une structure aromatique et/ou cycloaliphatique) et copolymères, polyesters (en particulier comprenant une structure aromatique et/ou cycloaliphatique), les polyaryléthercétones (PAEK), polyétheréther cétones (PEEK), polyéthercétone cétones (PEKK), polyéthercétoneéthercétone cétones (PEKEKK) polyphénylsulfures (PPS), PVDF.

Plus particulièrement préférés parmi les polymères semi-cristallins, sont les polyamides et leurs copolymères semi-cristallins, en particulier comprenant une structure aromatique et/ou cycloaliphatique. Comme polymères thermoplastiques amorphes, on peut citer le polyméthacrylate de méthyle (PMMA), polyétherimide (PEI), polysulfones (PSU), polyarylsulfones (PPSU), polyéthersulfones (PES).

Plus particulièrement, ledit procédé concerne un procédé de moulage par RTM (résine transfert molding), injection-compression ou S-RIM.

Ledit renfort fibreux est de préférence à base de fibres de renfort longues, de préférence avec L/D, rapport ou facteur de forme, longueur sur diamètre, supérieur à 1000, de préférence supérieur à 2000. Elles peuvent être sous forme d'un assemblage de fibres à l'état sec. Ledit assemblage peut être une préforme sèche de fibres (avant imprégnation) placée dans ledit moule fermé.

Plus particulièrement, la polymérisation dans le moule peut n'être que partielle, avec dans ce cas une étape prévue et mise en oeuvre séparément, de finition de la pièce moulée dans une étape séparée de recuit hors moule et à une température de recuit Tr, inférieure à la HDT dudit matériau composite mesurée selon la norme ISO R 75 A, dans le cas où la matrice dudit composite est constituée d'un polymère amorphe ou, dans le cas où la matrice dudit composite est constituée d'un polymère semi-cristallin, le recuit se fait à une température Tr inférieure à la température de fusion Tf dudit polymère thermoplastique semi-cristallin et plus particulièrement dans le cas préféré d'un polymère semi-cristallin, la température de recuit Tr est comprise entre Tf et Tf -30°C.

De préférence, l'écart entre la température d'injection T1 et la température de surface (ou paroi) interne T3 dudit moule est inférieure à 40°C et de préférence entre 10 et 40°C.

Dans le cas d'une polymérisation partielle, lors du démoulage de l'étape c), le taux global de conversion des fonctions réactives desdits prépolymères dans ladite composition réactive p), au démoulage de l'étape c), est d'au moins 50%, de préférence d'au moins 70% avec une conversion partielle, en particulier ne dépassant pas 90%.

La masse moléculaire moyenne en nombre Mn (calculée à partir de la titration des fonctions terminales) desdits prépolymères réactifs, de préférence semi-cristallins, en particulier polyamides semi-cristallins, impliqués dans ladite composition précurseur, est dans la plage allant de 500 à 10000, de préférence de 1000 à 6000.

Selon un mode préféré de réalisation du procédé de l'invention, la viscosité de ladite composition précurseur dans les conditions d'imprégnation, en particulier dans les conditions de température et de durée d'imprégnation, ne dépasse pas 50 Pa.s, de préférence ne dépasse pas 10 Pa.s et plus préférentiellement ne dépasse pas 5 Pa.s.

Dans le cas d'un polymère thermoplastique semi-cristallin, en particulier polyamide semi-cristallin composant la matrice thermoplastique dudit composite selon l'invention, il est caractérisé préférentiellement par une température de transition vitreuse Tg d'au moins 90°C, de préférence d'au moins 100°C et plus préférentiellement d'au moins 110°C, et encore plus préférentiellement d'au moins 120°C et d'une température de fusion Tf inférieure à 300°C et de préférence Tf inférieure à 300°C, plus préférentiellement inférieure à 280°C, plus particulièrement entre 200°C et 280°C.

Plus particulièrement, ledit polymère thermoplastique de ladite matrice est semi-cristallin, de préférence polyamide semi-cristallin, lesdits prépolymères réactifs correspondants de la composition réactive p) l'étant également et ladite température d'injection T1 de l'étape a) étant supérieure à ladite température de fusion Tf, dudit polymère thermoplastique, de préférence polyamide semi-cristallin.

La masse moléculaire moyenne Mn, en nombre dudit polymère polyamide final de la matrice thermoplastique dudit matériau composite est de préférence dans une plage allant de 10000 à 40000 et de préférence de 12000 à 30000. Ledit polymère final de matrice est obtenu avec des prépolymères réactifs correspondants (dans ladite composition réactive p)), de masse Mn d'au moins deux fois inférieure à ladite Mn dudit polymère final de la matrice dudit composite.

Dans le cas préféré d'une structure semi-cristalline dudit polymère thermoplastique de ladite matrice, en particulier polyamide, elle est essentiellement apportée par la structure des prépolymères réactifs correspondants, tels que définis selon compositions p1) et p2) ci-haut, également semi-cristallins et impliqués dans ladite composition précurseur p).

Concernant ladite composition précurseur p), selon une première option préférée, elle peut être définie selon p1) et en particulier être monocomposante à base d'un prépolymère polyamide p11) réactif bifonctionnel, de préférence semi-cristallin, portant sur la même chaîne une fonction terminale amine et une fonction terminale acide (carboxy).

Selon une autre option préférée de ladite composition précurseur p), elle est définie selon p1), elle est bicomposante et à base de deux prépolymères p12) : un premier prépolymère p121) polyamide réactif bifonctionnel, de préférence semi-cristallin, portant 2 fonctions réactives X' identiques d'amine ou d'acide (carboxy) et un deuxième prépolymère p122) polyamide réactif bifonctionnel, de préférence semi-cristallin, portant 2 fonctions Y' identiques d'amine ou d'acide (carboxy) avec les deux fonctions X' et Y' étant réactives entre elles, plus préférentiellement les deux prépolymères p121) et 122) étant semi-cristallins.

Selon une deuxième option préférée, ladite composition précurseur est définie selon p2) et elle est bicomposante à base d'un prépolymère p21) polyamide réactif bifonctionnel, de préférence semi-cristallin, portant 2 fonctions réactives X identiques d'amine ou d'acide (carboxy) et d'un allongeur de chaîne non polymérique, de préférence de masse moléculaire inférieure à 500 et en particulier inférieure à 400, ledit allongeur p22) portant 2 fonctions Y réactives identiques, avec ladite fonction X dudit prépolymère étant réactive avec ladite fonction Y dudit allongeur. Ladite fonction Y dudit allongeur p22) peut être sélectionnée comme suit en fonction de X :
- pour X étant carboxy, Y est choisi parmi : oxazoline, oxazine, imidazoline, aziridine ou époxy
- pour X étant amine, Y est choisi parmi : maléimide (de préférence avec amine secondaire pour éviter une réticulation avec bismaléimides), époxy, isocyanate bloqué, oxazinone, oxazolinone, caprolactame ou anhydride carboxylique et dans ce dernier cas en particulier ledit allongeur peut être choisi parmi les anhydrides cycliques aromatiques et/ou cycloaliphatiques.

Des exemples d'allongeurs p22) convenables pour l'invention sont cités ci-dessous. La partie de l'allongeur p22) portant les deux fonctions (groupements) Y pourrait être représentée par un biradical -A'-, ledit allongeur p22) ayant une formule globale Y-A'-Y.

Plus particulièrement, quand ledit allongeur Y-A'-Y correspond à une fonction Y choisie parmi oxazinone, oxazolinone, oxazine, oxazoline ou imidazoline, dans ce cas, dans l'allongeur de chaîne représenté par Y-A'-Y, A' peut représenter un alkylène, tel que -(CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques, et de préférence A' peut être un arylène et/ou un cycloalkylène. Ceci reste valable quand Y est époxy.

Dans le cas du carbonyl- ou térephtaloyl- ou isophtaloyl- biscaprolactame comme allongeur de chaîne Y-A'-Y, les conditions préférées évitent l'élimination de sous produit, comme le caprolactame lors de ladite polymérisation et moulage à l'état fondu.

Dans le cas où Y est une fonction d'isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère p21) porteur de X = amine, les conditions préférées évitent toute formation de cycle imide lors de la polymérisation et moulage (ou mise en oeuvre) à l'état fondu.

Pour X = amine, le groupement Y est choisi de préférence parmi : isocyanate bloqué, oxazinone et oxazolinone ou époxy, plus préférentiellement oxazinone et oxazolinone, avec comme radical A' étant comme défini ci-haut.

Comme exemples d'allongeurs de chaîne, portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leur mode de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en oeuvre de l'invention, on pourra se référer à ceux décrits (« A » à « F ») à la page 7 à 8 et tableau 1 de la page 10, dans la demande EP 0 739 924 ainsi qu'à leurs procédés de préparation et leur mode de réaction qui y sont exposés.

Comme exemples d'allongeurs de chaîne à fonction réactive Y = oxazinone ou oxazolinone qui conviennent à la mise en oeuvre de l'invention, on peut se référer à ceux décrits sous références « A » à « D » à la page 7 à 8 de la demande EP 0 581 641, ainsi qu'à leurs procédés de préparation et modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme A' pouvant être une simple liaison covalente avec pour allongeurs correspondants respectifs étant : bis-(benzoxazinone), bisoxazinone et bisoxazolinone.

A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y choisies parmi oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso-ou téréphtaloyle) avec comme exemple d'allongeur de cet type la 1, 1' isophtaloyl-bis(2-méthyl aziridine).

La présence d'un catalyseur de la réaction entre ledit prépolymère p21) et ledit allongeur p22) à un taux allant de 0,001 à 2%, de préférence de 0,01 à 0,5% par rapport au poids total de deux co-réactants cités peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9 lignes 1 à 7.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalénylènes). De préférence, A' représente un arylène qui peut être benzénique ou naphténique substitué ou non.

Les fibres du renfort fibreux peuvent être continues et présentes sous forme d'assemblage qui peut être une préforme. Elles peuvent se présenter sous forme de renfort unidirectionnel (UD) ou multidirectionnel (2D, 3D). En particulier, elles peuvent être sous forme de tissus, d'étoffes, de nappes, de bandes ou de tresses et peuvent également être coupées par exemple sous forme de non tissés (mats) ou sous forme de feutres.

Ces fibres de renfort peuvent être choisies parmi :
- les fibres minérales, celles-ci ayant des températures de fusion Tf' élevées et supérieures aux températures de mise en oeuvre,
- les fibres polymériques ou de polymère, ayant une température de fusion Tf' ou à défaut de Tf', une température de transition vitreuse Tg', bien supérieure aux températures de mise en oeuvre,
- ou les mélanges des fibres citées ci-haut.

Plus particulièrement, ces fibres de renfort peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al₂O₃, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
   ▪ les fibres de polymères thermoplastiques et plus particulièrement choisies parmi : le polyéthylène téréphtalate (PET), le polybutylène téréphtalate (PBT),
   ▪ les fibres de polyamides répondant à l'une des formules : 6, 11, 12, 6.10, 6.12, 6.6, 4.6,
   ▪ les fibres d'aramides (comme le Kevlar^{®}) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
   ▪ les fibres de copolymères blocs de polyamide tels que le polyamide/polyéther, les fibres de polyaryléthers cétones (PAEK) telle que la polyétheréther cétone (PEEK), la polyéthercétone cétone (PEKK), la polyéthercétoneéthercétone cétone (PEKEKK).

Les fibres de renfort préférées sont des fibres longues choisies parmi les : fibres de carbone, y compris métallisées, fibres de verre, y compris métallisées de type E, R, S2, fibres d'aramides (comme le Kevlar^{®}) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone, de céramique et fibres d'aramides (comme le Kevlar^{®}) ou leurs mélanges.

Lesdites fibres peuvent représenter des taux de 40% à 70% en volume et de préférence de 50% à 65% en volume dudit matériau composite.

L'assemblage de fibres peut être aléatoire (mat), unidirectionnel (UD) ou multidirectionnel (bidirectionnel 2D, tridimensionnel 3D ou autre). Son grammage, c'est-à-dire son poids par mètre carré peut aller de 100 à 1000 g/m², de préférence de 200 à 700g/m².

Concernant le renfort fibreux dudit matériau composite thermoplastique, il est de préférence à base de fibres de renfort longues avec facteur de forme L/D supérieur à 1000, de préférence supérieur à 2000, L étant la longueur et D étant le diamètre de la fibre.

Les fibres les plus préférées sont sélectionnées parmi les fibres de verre, de carbone, de céramique et d'aramide ou leurs mélanges.

En plus desdites fibres de renfort, la composition dudit composite thermoplastique du procédé selon l'invention peut comprendre d'autres charges et additifs.

Parmi les charges convenables, on peut citer par exemple : les charges minérales ou organiques, comme le noir de carbone, nanotubes de carbone (NTC), nanofibrilles de carbone, billes ou poudre de verre, polymères recyclés broyés à l'état de poudre.

Parmi les additifs convenables, on peut citer : des additifs absorbants dans l'UV ou IR de façon à permettre le soudage du composite obtenu, par une technologie laser (UV ou IR) et des stabilisants thermiques choisis parmi les antioxydants de type phénols stériquement encombrés ou amines stériquement encombrées (HALS). La fonction de ces stabilisants est de prévenir l'oxydation thermique et la photoxydation et dégradation conséquente du polyamide matrice du composite obtenu.

Ladite pièce de matériau composite thermoplastique du procédé de l'invention est en particulier une pièce mécanique ou de structure, y compris semi-structurale, de préférence en 3D. La présente invention couvre également l'utilisation du procédé tel que défini selon l'invention ci-haut dans la fabrication de pièces mécaniques et de structure, pouvant être en 3D (tridimensionnelles), ces pièces étant en particulier utilisées pour des applications dans le domaine de l'automobile, ferroviaire, marin, de l'éolien, photovoltaïque, solaire pour chauffage thermique et centrales thermiques, du sport, aéronautique et spatial, du transport routier (pièces pour camions), du bâtiment, génie civil, équipements urbains et signalisation, des panneaux, des loisirs.

Méthodes générales de détermination des caractéristiques citées :
- La viscosité à l'état fondu du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de 100 s⁻¹, entre deux plans parallèles de diamètre de 50 mm.
- La Mn du prépolymère ou du polymère thermoplastique est déterminée à partir de la titration (dosage) des fonctions terminales selon une méthode potentiométrique (dosage direct pour NH₂ ou carboxy) et à partir de la fonctionnalité théorique qui est de 2 (en fonctions terminales) pour prépolymères et polymères linéaires préparés à partir de seuls monomères bifonctionnels.
- La température de transition vitreuse Tg des polymères thermoplastiques utilisés est mesurée à l'aide d'un calorimètre différentiel à balayage (DSC), après un 2^{ème} passage en chauffe, suivant la norme ISO 11357-2. La vitesse de chauffage et de refroidissement est de 20°C/min.
- La température de fusion Tf et la température de cristallisation Tc est mesurée par DSC, après une 1^{ère} chauffe, selon ISO 11357-3. La vitesse de chauffage et de refroidissement est de 20°C/min.

Les exemples suivants sont donnés à titre d'illustration de l'invention et de ses performances, sans aucune limitation sur la portée des objets revendiqués.

### Exemples

### A) Préparation de prépolymères P(X)n

### Exemple 1: Prépolymère polyamide diacide semi-cristallin 11/6.T/10.T

Dans un réacteur autoclave de 2 litres, on introduit successivement :

| | |
|---|---|
| - acide amino11 undécanoïque | 41,2 g |
| - 1,6 hexanediamine (HMDA) | 71,3 g |
| - 1,10 décanediamine | 250,3 g |
| - Acide téréphtalique | 390,0 g |
| - Rhodorsil^{®} RG22 | 0,375 g |
| - NaH₂PO₂ 60% dans l'eau | 3,0 g |
| - eau | 188,7 g |

Le Rhodorsil^{®} RG22, un antimousse, est commercialisé par la Société Bluestar Silicones.

Après fermeture du réacteur, l'atmosphère est purgée de son oxygène par de l'azote. Le réacteur (contenu) est ensuite chauffé à 250°C, la pression dans le réacteur atteignant 32 bars. L'eau est progressivement éliminée du réacteur par détente en maintenant 32 bars et une température matière d'environ 250°C. La pression est ensuite abaissée jusqu'à pression atmosphérique par détente en augmentant progressivement la température matière jusqu'à 300°C. Le réacteur arrivé à pression atmosphérique est ensuite mis sous balayage d'azote pendant 20 minutes. Le contenu du réacteur est ensuite vidangé et refroidi dans l'eau. Après essorage, broyage grossier et séchage, on recueille 650 g de prépolymère.

Les propriétés et caractéristiques essentielles de ce prépolymère sont présentées au tableau 1 ci-dessous.

**Tableau 1 : Caractéristiques du prépolymère de l'exemple 1**

| Prépolymère | X | Tg (°C) | Tf (°C) | Tc (°C) | NH₂ (meq /g) | COOH (meq/ g) | n | Mn calc | Visco sité inh (dl/g) | Viscosi té état fondu 100 s⁻¹ (Pa.s) | T° vs Visco sité fondu (°C) |
|---|---|---|---|---|---|---|---|---|---|---|---|
| 11/6T/10T | Carboxy | 101 | 267 | 235 | 0 | 0,845 | 2 | 2366 | 0,35 | 1,1 | 300 |

### B) Préparation des pièces composites et performances

Appareillage utilisé et principe de fonctionnement

Un équipement RTM est utilisé comprenant 2 chambres séparées chauffantes permettant de fondre séparément le prépolymère et l'allongeur de chaîne. Deux pistons (un par chambre), fonctionnant sous 1 à 10 bars, permettent d'envoyer les 2 composants fondus dans un mélangeur statique puis d'injecter le mélange réactif dans un moule contenant un renfort fibreux.

Le temps de séjour est court (inférieur à 10 s) et permet d'éviter tout allongement de chaîne significatif. Ainsi, la viscosité du mélange peut être considérée identique à celle du prépolymère seul, à la température d'injection.

Le renfort fibreux utilisé est un tissu 600T FV de Chomrat (600g/m²), 4 couches de ce renfort fibreux ont été déposées dans le moule avant injection pour fabriquer une plaque de composite. Le taux de fibres dans la plaque composite est de 60% en volume (vol.).

La vitesse du piston permet également d'ajuster le temps de séjour dans le mélangeur de manière à comparer l'effet de certains paramètres du procédé, selon l'invention et en dehors de l'invention.

Le rapport molaire entre fonctions réactives X dudit prépolymère et Y dudit allongeur est de : 1/1 (stoechiométrie).
Moule : cylindrique, 70 mm x 4 mm.
% en volume de fibres : 60% en vol.
Performances mécaniques : flexion en 3 points selon la norme ISO 14125.
Température de fusion Tf du prépolymère et allongeur : 267°C.

### Exemples de composite

Dans tous les cas, on utilise le même prépolymère réactif (exemple 1 selon tableau 1) et comme allongeur de chaîne le PBO (bisoxazoline) Allinco 1-3 commercialisé par la société DSM, qui est un allongeur de chaîne présentant 2 fonctions oxazolines.

### Exemple 1 (comparatif)

Dans l'une des chambres, on fond ledit prépolymère avant allongement de chaîne. Ce prépolymère est fonctionnalisé diacide. Dans l'autre chambre, on fond du PBO. Le mélange réactif est ensuite injecté à 280°C (T1) en moins de 10 s, dans un moule maintenu à 220°C (T2). La viscosité à l'état fondu du mélange est la même que celle du prépolymère, soit 1 Pa.s.
Résultat: l'imprégnation est mauvaise, le mélange réactif se fige et cristallise sur la paroi du moule froid et empêche l'imprégnation des fibres.

### Exemple 2 (selon invention avant un recuit et complété avec recuit selon exemple 3)

Dans l'une des chambres, on fond ledit prépolymère avant allongement de chaîne. Ce prépolymère est fonctionnalisé diacide. Dans l'autre chambre on fond du PBO (bisoxazoline) Allinco 1-3 commercialisé par la société DSM, qui est un allongeur de chaîne présentant 2 fonctions oxazolines.

Le mélange réactif est ensuite injecté à 280°C, en moins de 10 s, dans un moule maintenu à 220°C (T2). La viscosité en fondu du mélange est la même que celle du prépolymère, soit 1 Pa.s. Cependant par rapport à l'exemple précédent, juste avant l'injection du mélange réactif (prépolymère + allongeur), on introduit de l'air chaud à 260°C en 10 s et on le maintient encore pendant 10 s, puis on purge sous vide (50 mbars) cet air chaud en moins de 10 s. Le démoulage s'effectue à 220°C et 5 minutes après l'injection de la résine.
Résultats: l'imprégnation des fibres est très bonne, les propriétés mécaniques et la Tg sont données dans le tableau 2 ci-dessous. Ces propriétés montrent que le réchauffage de la paroi du moule juste avant injection permet l'imprégnation correcte des fibres ainsi que le démoulage de la plaque à 220°C, même si l'avancement de la polymérisation (partielle) n'est pas encore suffisant pour permettre d'atteindre les propriétés mécaniques finales satisfaisantes mais qui peuvent être atteintes par une étape séparée supplémentaire de recuit comme dans l'exemple 3 ci-dessous n'affectant pas le cycle de moulage.

**Tableau 2**

| FLEXION 3 POINTS | | | DSC | |
|---|---|---|---|---|
| E (GPa) | σ rupture (MPa) | ε rupture (%) | Tg prépolymère | Tg plaque composite |
| 13,0 | 160 | 2,16 | 101°C | 105°C |

### Exemple 3 (selon l'invention avec recuit)

Dans l'une des chambres, on fond ledit prépolymère avant allongement de chaîne. Ce prépolymère est fonctionnalisé diacide. Dans l'autre chambre, on fond du PBO (bisoxazoline) Allinco 1-3 commercialisé par la société DSM, qui est un allongeur de chaîne présentant 2 fonctions oxazolines.

Le mélange réactif est ensuite injecté en moins de 10 s et à 280°C dans un moule maintenue à 220°C. La viscosité à l'état fondu du mélange est la même que celle du prépolymère, soit 1 Pa.s. Juste avant l'injection du mélange réactif, on introduit de l'air chaud à 260°C en 10 s et on le maintient encore pendant 10 s, puis on purge cet air chaud sous vide en moins de 10 s. Le démoulage s'effectue à 220°C et 5 minutes après l'injection de la résine. On effectue un recuit de la plaque composite en étuve pendant 60 minutes à 250°C.
Résultats: l'imprégnation des fibres est très bonne (comme exemple 2), les propriétés mécaniques et la Tg sont données dans le tableau 3 ci-dessous. Ces propriétés sont très bonnes et montrent que le réchauffage de la paroi du moule juste avant injection permet l'imprégnation correcte de fibres, le démoulage à 220°C et également que le recuit en étuve après le démoulage permet une polymérisation suffisamment avancée pour conduire à des propriétés mécaniques finales très satisfaisantes.

**Tableau 3**

| FLEXION 3 POINTS | | | DSC | |
|---|---|---|---|---|
| E (GPa) | σ rupture (MPa) | ε rupture (%) | Tg prépolymère | Tg plaque composite |
| 24,5 | 605 | 2,5 | 101°C | 110°C |

## Revendications

1. Procédé de fabrication d'une pièce de matériau composite thermoplastique comprenant un renfort fibreux et une matrice thermoplastique constituée d'un polymère thermoplastique, de préférence semi-cristallin, plus préférentiellement à base d'un polyamide semi-cristallin, et en particulier ayant une température de fusion Tf inférieure à 320°C, de préférence Tf inférieure à 300°C, plus préférentiellement Tf inférieure à 280°C et ladite matrice imprégnant ledit renfort fibreux, ledit procédé étant **caractérisé en ce qu'**il comprend :
a) une étape d'imprégnation dudit renfort fibreux, sec et prédisposé dans ledit moule fermé, par injection sur ledit renfort, à une température d'injection T1 supérieure à la température de distorsion à la chaleur HDT dudit matériau composite, mesurée selon la norme ISO R 75 A, lorsque sa matrice est constituée d'un polymère amorphe et de préférence, T1 étant supérieure à HDT +100°C et dans le cas où la matrice du composite est constituée d'un polymère thermoplastique semi-cristallin, T1 étant supérieure à la température de fusion Tf, dudit polymère, d'une composition réactive p) liquide, à l'état fondu, de préférence ayant une viscosité à ladite température d'injection T1 inférieure à 50 Pa.s, de préférence inférieure à 10 Pa.s, et plus préférentiellement inférieure à 5 Pa.s, ladite composition réactive p) étant précurseur dudit polymère thermoplastique, et à base de, ou comprenant au moins un prépolymère réactif dudit polymère thermoplastique,
- et **en ce que**, la température de régulation dudit moule fermé T2 est maintenue à une valeur constante (isotherme) durant le moulage, inférieure à la HDT dudit matériau composite, lorsque sa matrice est amorphe et lorsque cette matrice est semi-cristalline, ladite température T2 est comprise entre Tc et Tc -20°C, avec Tc étant la température de cristallisation dudit polymère de matrice, et de préférence T2 étant comprise entre Tc -5°C et Tc -15°C
- et **en ce que** la surface interne dudit moule est réchauffée juste avant l'injection de ladite composition réactive p) dans ledit moule, à une température T3, comprise entre T1 -50°C et T1 +50°C,
- et **en ce que** ledit réchauffage de surface interne est réalisé juste avant l'injection de ladite composition réactive p), par un moyen de chauffage externe au moule et amovible,
et de préférence,
- ce moyen de chauffage externe utilisant des infra-rouges ou des micro-ondes ou étant résistif ou inductif et étant alors introduit dans le moule en position ouverte, puis retiré pour permettre la fermeture du moule et l'injection de la dite composition réactive p),
- ou (de préférence) **en ce que** ledit moyen de chauffage externe est basé sur le soufflage d'un fluide gaz chaud, de préférence d'air chaud, plus préférentiellement d'azote ou d'un autre gaz inerte (non oxydant) chaud, dans ledit moule en position fermée, en particulier la température dudit fluide gaz chaud étant comprise entre T1 -50°C et T1 +50°C, et plus particulièrement le temps d'injection de ce fluide gaz chaud étant inférieur à 30 s, de préférence inférieur à 10 s, et encore plus particulièrement le temps de maintien dudit fluide gaz chaud dans ledit moule étant inférieur à 1 minute, de préférence inférieur à 30 s, ledit moule étant ensuite purgé dudit fluide gaz chaud, avant l'introduction de ladite composition réactive p),
b) une étape de polymérisation au moins partielle de ladite composition p) réactive par polycondensation ou par polyaddition suivant le cas, et moulage avec l'étape de polymérisation étant simultanée avec l'étape d'imprégnation a) et avec ledit moulage,
c) démoulage de ladite pièce dès que la température de ladite pièce T4 est égale à ladite température de régulation T2 en isotherme dudit moule, avec la polymérisation de ladite composition précurseur p) étant éventuellement partielle,
d) éventuellement et si nécessaire, poursuite de la polymérisation de ladite pièce dans une étape séparée et hors moule, par recuit dans une étuve, de préférence à une température de recuit Tr inférieure à la HDT dudit matériau, pour polymère (matrice) amorphe et Tr étant inférieure à la température de fusion Tf dans le cas d'un polymère (matrice) semi-cristallin et plus particulièrement dans le cas d'un polymère semi-cristallin ladite température Tr étant située entre Tf et Tf -30°C.

2. Procédé selon la revendication 1, **caractérisé en ce que** ladite composition p) est définie selon les options p1) et p2) suivantes :
p1) une composition précurseur monocomposante p11) ou bicomposante p12), ladite composition monocomposante p11) étant à base d'un prépolymère réactif thermoplastique p11), de préférence semi-cristallin et plus préférentiellement prépolymère réactif polyamide semi-cristallin, réactif sur lui-même, de préférence par polycondensation et ladite composition bicomposante p12) étant à base de deux prépolymères réactifs thermoplastiques p121) et p122), de préférence semi-cristallins, plus préférentiellement prépolymères réactifs polyamides semi-cristallins, réactifs entre eux , de préférence par polycondensation ou polyaddition
p2) une composition bicomposante comprenant un prépolymère réactif thermoplastique p21), de préférence semi-cristallin, plus préférentiellement prépolymère réactif polyamide semi-cristallin et un allongeur de chaîne p22) non polymérique, porteur de groupements réactifs avec ceux dudit prépolymère p21) et avec p21) et p22) étant réactifs par réaction de polyaddition.

3. Procédé selon la revendication 1 ou 2, **caractérisé en ce qu'**il s'agit d'un procédé de moulage RTM (transfert résine moulage) ou d'injection-compression ou S-RIM (Réaction Injection Moulage Structural).

4. Procédé selon l'une des revendications 1 à 3, **caractérisé en ce que** ledit polymère thermoplastique de ladite matrice est semi-cristallin, de préférence un polyamide semi-cristallin, comme le sont lesdits prépolymères réactifs correspondants de la composition réactive p), avec ladite température d'injection T1 de l'étape a) étant supérieure à ladite Tf dudit polymère thermoplastique, de préférence polyamide semi-cristallin.

5. Procédé selon l'une des revendications 1 à 4, **caractérisé en ce que** ladite polymérisation dans le moule en étape b) n'est que partielle et qu'une étape de finition de la pièce moulée par recuit hors moule est mise en oeuvre séparément à une température Tr inférieure à ladite HDT dudit matériau composite, pour polymère amorphe et Tr inférieure à la température de fusion Tf dudit polymère thermoplastique, quand il est semi-cristallin plus particulièrement dans le cas d'un polymère semi-cristallin, ladite température Tr étant entre Tf et Tf -30°C.

6. Procédé selon l'une des revendications 1 à 5, **caractérisé en ce que** l'écart entre la température d'injection T1 de ladite composition p) et la température de surface (paroi) interne T3 dudit moule est inférieure à 40°C et de préférence entre 10 et 40°C.

7. Procédé selon l'une des revendications 1 à 6, **caractérisé en ce que** le taux global de conversion des fonctions réactives desdits prépolymères dans ladite composition réactive p) au démoulage c) est d'au moins 50%, de préférence d'au moins 70%, avec ladite conversion n'étant que partielle, en particulier ne dépassant pas 90%.

8. Procédé selon l'une des revendications 1 à 7, **caractérisé en ce que** la masse moléculaire moyenne en nombre Mn (calculée à partir de dosage des fonctions) desdits prépolymères réactifs est dans la plage allant de 500 à 10000, de préférence de 1000 à 6000.

9. Procédé selon l'une des revendications 1 à 8, **caractérisé en ce que** la viscosité de ladite composition précurseur p) dans les conditions d'imprégnation ne dépasse pas 50 Pa.s, de préférence ne dépasse pas 10 Pa.s et plus préférentiellement ne dépasse pas 5 Pa.s.

10. Procédé selon l'une des revendications 1 à 9, **caractérisé en ce que** la température de transition vitreuse du polymère de ladite matrice thermoplastique est d'au moins 90°C, de préférence d'au moins 100°C et plus préférentiellement d'au moins 110°C et encore plus préférentiellement d'au moins 120°C et que la température de fusion Tf, dans le cas où ledit polymère est semi-cristallin, est inférieure à 300°C, de préférence inférieure à 280°C.

11. Procédé selon l'une des revendications 1 à 10, **caractérisé en ce que** ladite composition précurseur p) est telle que définie selon p1) en étant monocomposante à base d'un prépolymère polyamide p11) réactif bifonctionnel portant sur la même chaîne une fonction terminale amine et une fonction terminale acide (carboxy), de préférence ledit prépolymère polyamide p11) étant semi-cristallin.

12. Procédé selon l'une des revendications 1 à 10, **caractérisé en ce que** ladite composition précurseur est telle que définie selon p1) en étant bicomposante à base de deux prépolymères p12) polyamides: un premier prépolymère p121) polyamide réactif bifonctionnel portant 2 fonctions réactives X' identiques d'amine ou d'acide (carboxy) et un deuxième prépolymère p122) polyamide réactif bifonctionnel portant 2 fonctions Y' identiques d'amine ou d'acide (carboxy) avec les deux fonctions X' et Y' étant réactives entre elles, de préférence lesdits prépolymères polyamides p121) et p122) étant semi-cristallins.

13. Procédé selon l'une des revendications 1 à 10, **caractérisé en ce que** ladite composition précurseur est telle que définie selon p2) en étant bicomposante comprenant un prépolymère p21) polyamide réactif bifonctionnel portant 2 fonctions réactives X identiques d'amine ou d'acide (carboxy) et un allongeur de chaîne non polymérique p22), de préférence de masse moléculaire inférieure à 500 et en particulier inférieure à 400, ledit allongeur p22) portant 2 fonctions Y réactives identiques, avec lesdites fonctions X dudit prépolymère p21) étant réactives avec lesdites fonctions réactives Y dudit allongeur p22) et de préférence ledit prépolymère polyamide p21) étant semi-cristallin.

14. Procédé selon la revendication 13, **caractérisé en ce que** ladite fonction Y dudit allongeur p22) est sélectionnée comme suit en fonction de X :
- pour X étant carboxy, Y est choisi parmi : oxazoline, oxazine, imidazoline, aziridine ou époxy
- pour X étant amine, Y est choisi parmi : maléimide, époxy, isocyanate bloqué, oxazinone, oxazolinone, caprolactame ou anhydride carboxylique (ou carboxy).

15. Procédé selon l'une des revendications 1 à 14, **caractérisé en ce que** ledit renfort fibreux est à base de fibres de renfort longues, en particulier ayant un rapport ou facteur de forme L/D supérieur à 1000, de préférence supérieur à 2000.

16. Procédé selon l'une des revendications 1 à 15, **caractérisé en ce que** ladite pièce est une pièce mécanique ou de structure, y compris semi-structurale, en particulier en 3D.

17. Utilisation du procédé tel que défini selon l'une des revendications 1 à 12, dans la fabrication de pièces mécaniques et de structure, en particulier pour des applications dans le domaine de l'automobile, ferroviaire, marin, de l'éolien, du sport, aéronautique et spatial, photovoltaïque, solaire y compris pièces pour chauffage solaire thermique ou centrales solaires thermiques, transport routier (pièces pour camions), du bâtiment, génie civil, équipements urbains et signalisation, des panneaux et loisirs.

## Patentansprüche

1. Verfahren zur Herstellung eines Teils aus thermoplastischem Verbundmaterial, umfassend eine Faserverstärkung und eine thermoplastische Matrix, die aus einem thermoplastischen, bevorzugt semikristallinen Polymer besteht, das stärker bevorzugt auf einem semikristallinen Polyamid basiert und insbesondere eine Schmelztemperatur Tf kleiner 320 °C, bevorzugt eine Tf kleiner 300 °C, noch stärker bevorzugt eine Tf kleiner 280 °C aufweist und wobei die Matrix die Faserverstärkung imprägniert, wobei das Verfahren **dadurch gekennzeichnet ist, dass** es Folgendes umfasst:
a) einen Schritt zum Imprägnieren der trockenen und vorher in der geschlossenen Form angeordneten Faserverstärkung, durch Injektion auf die Verstärkung bei einer Injektionstemperatur T1, die größer ist als die Wärmeformbeständigkeitstemperatur HDT des Verbundmaterials, gemessen gemäß der ISO-Norm R 75 A, wenn seine Matrix aus einem amorphen Polymer besteht und T1 bevorzugt größer ist als die HDT +100 °C und falls die Matrix des Verbunds aus einem semikristallinen thermoplastischen Polymer besteht, wobei T1 größer ist als die Schmelztemperatur Tf des Polymers, einer flüssigen reaktiven Zusammensetzung p) in geschmolzenem Zustand, die bei der Injektionstemperatur T1 bevorzugt eine Viskosität kleiner 50 Pa.s, bevorzugt kleiner 10 Pa.s und stärker bevorzugt kleiner 5 Pa.s aufweist, wobei die reaktive Zusammensetzung p) ein Vorläufer des thermoplastischen Polymers ist und auf einem reaktiven Prepolymer des thermoplastischen Polymers basiert oder mindestens ein solches umfasst,
- und dadurch, dass die Regulationstemperatur der geschlossenen Form T2 während der Formung auf einem konstanten Wert (isotherm) gehalten wird, der kleiner ist als die HDT des Verbundmaterials, wenn seine Matrix amorph ist und wenn diese Matrix semikristallin ist, wobei die Temperatur T2 im Bereich zwischen Tc und Tc -20 °C liegt, wobei Tc die Kristallisationstemperatur des Polymers der Matrix ist, und wobei T2 bevorzugt im Bereich zwischen Tc -5 °C und Te -15 °C liegt,
- und dadurch, dass die innere Oberfläche der Form unmittelbar vor der Injektion der reaktiven Zusammensetzung p) in die Form auf eine Temperatur T3 im Bereich zwischen T1 -50 °C und T1 +50 °C erwärmt wird,
- und dadurch, dass das Erwärmen der inneren Oberfläche unmittelbar vor der Injektion der reaktiven Zusammensetzung p) mithilfe einer Heizeinrichtung durchgeführt wird, die sich außerhalb der Form befindet und abnehmbar ist,
und
- wobei diese außerhalb befindliche Heizeinrichtung bevorzugt Infrarotstrahlen oder Mikrowellen verwendet oder kapazitiv oder induktiv ist und dann in die Form in geöffneter Position eingeführt, dann entfernt wird, um das Schließen der Form und die Injektion der reaktiven Zusammensetzung p) zu ermöglichen,
- oder (bevorzugt) dadurch, dass die außen befindliche Heizeinrichtung auf dem Einblasen eines Fluid-Heißgases, bevorzugt heißer Luft, stärker bevorzugt Stickstoff oder eines anderen inerten (nicht oxidierenden) Heißgases in die Form in geschlossener Position basiert, wobei die Temperatur des Fluid-Heißgases insbesondere im Bereich zwischen T1 -50 °C und T1 +50 °C liegt und wobei die Injektionszeit dieses Fluid-Heißgases insbesondere kleiner 30 Sek., bevorzugt kleiner 10 Sek. ist und wobei noch stärker bevorzugt die Verweildauer des Fluid-Heißgases in der Form kleiner 1 Minute, bevorzugt kleiner 30 Sek. ist, wobei die Form anschließend vor der Einführung der reaktiven Zusammensetzung p) mit dem Fluid-Heißgas gespült wird,
b) einen Schritt zum mindestens teilweisen Polymerisieren der reaktiven Zusammensetzung p) gegebenenfalls durch Polykondensation oder durch Polyaddition und Formen, wobei der Schritt zum Polymerisieren gleichzeitig mit dem Schritt zum Imprägnieren a) und mit dem Formen stattfindet,
c) Entformen des Teils, sobald die Temperatur des Teils T4 gleich der isothermen Regulationstemperatur T2 der Form ist, wobei die Polymerisierung der Vorläuferzusammensetzung p) eventuell teilweise ist,
d) eventuell und falls erforderlich, Fortsetzen der Polymerisierung des Teils in einem separaten Schritt und außerhalb der Form, durch Glühen in einem Ofen, bevorzugt bei einer Glühtemperatur Tr, die kleiner ist als die HDT des Materials, für ein amorphes Polymer (Matrix) und Tr kleiner ist als die Schmelztemperatur Tf im Fall eines semikristallinen Polymers (Matrix) und wobei im Fall eines semikristallinen Polymers die Temperatur Tr stärker bevorzugt zwischen Tf und Tf -30 °C liegt.

2. Verfahren nach Anspruch 1, **dadurch gekennzeichnet, dass** die Zusammensetzung p) gemäß den folgenden Optionen p1) und p2) definiert ist:
p1) eine Einkomponenten-Vorläuferzusammensetzung p11) oder Zweikomponenten-Vorläuferzusammensetzung p12), wobei die Einkomponentenzusammensetzung p11) auf einem bevorzugt semikristallinen, reaktiven, thermoplastischen Prepolymer p11) basiert und stärker bevorzugt einem semikristallinen, reaktiven Polyamid-Prepolymer, das selbstreaktiv ist, bevorzugt durch Polykondensation, und wobei die Zweikomponentenzusammensetzung p12) auf zwei bevorzugt semikristallinen, reaktiven, thermoplastischen Prepolymeren p121) und p122) basiert, stärker bevorzugt semikristallinen, reaktiven Polyamid-Prepolymeren, die untereinander reaktiv sind, bevorzugt durch Polykondensation oder Polyaddition,
p2) eine Zweikomponentenzusammensetzung, umfassend ein bevorzugt semikristallines, reaktives, thermoplastisches Prepolymer p21), stärker bevorzugt ein semikristallines, reaktives Polyamid-Prepolymer und einen nicht-polymeren Kettenverlängerer p22), der Träger von Gruppen ist, die mit jenen des Prepolymers p21) reaktiv sind, und wobei p21) und p22) durch Polyadditionsreaktion reaktiv sind.

3. Verfahren nach Anspruch 1 oder 2, **dadurch gekennzeichnet, dass** es sich um ein RTM-Verfahren (Harztransferpressen) oder Spritzprägeverfahren oder ein S-RIM-Verfahren (Struktur-Reaktionsspritzguss) handelt.

4. Verfahren nach einem der Ansprüche 1 bis 3, **dadurch gekennzeichnet, dass** das thermoplastische Polymer der Matrix semikristallin ist, bevorzugt ein semikristallines Polyamid, wie es die entsprechenden reaktiven Prepolymere der reaktiven Zusammensetzung p) sind, wobei die Injektionstemperatur T1 von Schritt a) größer ist als die Tf des thermoplastischen Polymers, bevorzugt des semikristallinen Polyamids.

5. Verfahren nach einem der Ansprüche 1 bis 4, **dadurch gekennzeichnet, dass** die Polymerisierung in der Form in Schritt b) nur teilweise ist und dass ein Endbearbeitungsschritt des Formteils durch Glühen außerhalb der Form separat bei einer Temperatur Tr durchgeführt wird, die kleiner ist als die HDT des Verbundmaterials, für amorphes Polymer und Tr kleiner als die Schmelztemperatur Tf des thermoplastischen Polymers, wenn es semikristallin ist, insbesondere im Fall eines semikristallinen Polymers, wobei die Temperatur Tr zwischen Tf und Tf -30 °C liegt.

6. Verfahren nach einem der Ansprüche 1 bis 5, **dadurch gekennzeichnet, dass** der Unterschied zwischen der Injektionstemperatur T1 der Zusammensetzung p) und der Temperatur der inneren Oberfläche (Wand) T3 der Form kleiner ist als 40 °C und bevorzugt zwischen 10 und 40 °C liegt.

7. Verfahren nach einem der Ansprüche 1 bis 6, **dadurch gekennzeichnet, dass** der Gesamtumwandlungsgrad der reaktiven Funktionen der Prepolymere in der reaktiven Zusammensetzung p) beim Entformen c) mindestens 50 %, bevorzugt mindestens 70 % beträgt, wobei die Umwandlung nur teilweise erfolgt, insbesondere 90 % nicht übersteigt.

8. Verfahren nach einem der Ansprüche 1 bis 7, **dadurch gekennzeichnet, dass** die zahlenmittlere Molmasse Mn (berechnet aus der Bestimmung der Funktionen) der reaktiven Prepolymere im Bereich zwischen 500 bis 10.000, bevorzugt 1.000 bis 6.000 liegt.

9. Verfahren nach einem der Ansprüche 1 bis 8, **dadurch gekennzeichnet, dass** die Viskosität der Vorläuferzusammensetzung p) unter den Imprägnierungsbedingungen 50 Pa.s nicht übersteigt, bevorzugt 10 Pa.s nicht übersteigt und stärker bevorzugt 5 Pa.s nicht übersteigt.

10. Verfahren nach einem der Ansprüche 1 bis 9, **dadurch gekennzeichnet, dass** die Glasübergangstemperatur des Polymers der thermoplastischen Matrix mindestens 90 °C, bevorzugt mindestens 100 °C und stärker bevorzugt mindestens 110 °C und sogar noch stärker bevorzugt mindestens 120 °C beträgt und dass die Schmelztemperatur Tf, falls das Polymer semikristallin ist, kleiner 300 °C, bevorzugt kleiner 280 °C ist.

11. Verfahren nach einem der Ansprüche 1 bis 10, **dadurch gekennzeichnet, dass** die Vorläuferzusammensetzung p) ist wie gemäß p1) definiert, wobei sie eine Einkomponentenzusammensetzung ist, die auf einem reaktiven bifunktionellen Polyamid-Prepolymer p11) basiert, das auf der gleichen Kette eine terminale Aminfunktion und eine terminale Säurefunktion (Carboxy) trägt, wobei das Polyamid-Prepolymer p11) bevorzugt semikristallin ist.

12. Verfahren nach einem der Ansprüche 1 bis 10, **dadurch gekennzeichnet, dass** die Vorläuferzusammensetzung ist wie gemäß p1) definiert, wobei sie eine Zweikomponentenzusammensetzung ist, die auf zwei Polyamid-Prepolymeren p12) basiert: einem ersten reaktiven, bifunktionellen Polyamid-Prepolymer p121), das 2 reaktive, identische Amin- oder Säure(Carboxy)-Funktionen X' trägt, und einem zweiten reaktiven, bifunktionellen Polyamid-Prepolymer p122), das 2 identische Amin- oder Säure(Carboxy)-Funktionen Y' trägt, wobei die beiden Funktionen X' und Y' untereinander reaktiv sind, wobei die Polyamid-Prepolymere p121) und p122) bevorzugt semikristallin sind.

13. Verfahren nach einem der Ansprüche 1 bis 10, **dadurch gekennzeichnet, dass** die Vorläuferzusammensetzung ist wie gemäß p2) definiert, wobei sie eine Zweikomponentenzusammensetzung ist, die ein reaktives, bifunktionelles Polyamid-Prepolymer p21) umfasst, das 2 reaktive, identische Amin- oder Säure(Carboxy)-Funktionen X und einen nicht polymereren Kettenverlängerer p22) trägt, bevorzugt mit einer Molmasse kleiner 500 und insbesondere kleiner 400, wobei der Verlängerer p22) 2 reaktive, identische Funktionen Y trägt, wobei die Funktionen X des Prepolymers p21) mit den reaktiven Funktionen Y des Verlängerers p22) reaktiv sind und das Polyamid-Prepolymer p21) bevorzugt semikristallin ist.

14. Verfahren nach Anspruch 13, **dadurch gekennzeichnet, dass** die Funktion Y des Verlängerers p22) in Abhängigkeit von X wie folgt ausgewählt ist:
- wenn X für Carboxy steht, ist Y ausgewählt aus: Oxazolin, Oxazin, Imidazolin, Aziridin oder Epoxy
- wenn X für Amin steht, ist Y ausgewählt aus: Maleimid, Epoxy, blockiertes Isocyanat, Oxazinon, Oxazolinon, Caprolactam oder Carbonsäureanhydrid (oder Carboxy).

15. Verfahren nach einem der Ansprüche 1 bis 14, **dadurch gekennzeichnet, dass** die Faserverstärkung auf langen Verstärkungsfasern basiert, die insbesondere ein Verhältnis oder einen Formfaktor L/D größer 1.000, bevorzugt größer 2.000 aufweisen.

16. Verfahren nach einem der Ansprüche 1 bis 15, **dadurch gekennzeichnet, dass** das Teil ein mechanisches Teil oder ein Strukturteil ist, einschließlich eines semistrukturellen Teils, insbesondere eines 3D-Teils.

17. Verwendung des Verfahrens wie in einem der Ansprüche 1 bis 12 definiert bei der Herstellung von mechanischen Teilen und Strukturteilen, insbesondere für Anwendungen im Automobilsektor, im Schienenverkehr, in der Schifffahrt, in der Windkraft, im Sport, in der Luft- und Raumfahrt, in der Photovoltaik, der Sonnenenergie, einschließlich Teilen für eine solarthermische Heizung oder solarthermische Kraftwerke, im Straßenverkehr (Teile für Lastwagen), im Bauwesen, im Hoch- und Tiefbau, bei städtischen Ausstattungen und bei der Beschilderung, bei Tafeln und in der Freizeit.

## Claims

1. A process for manufacturing a part made of thermoplastic composite material comprising a fibrous reinforcement and a thermoplastic matrix consisting of a thermoplastic polymer, which is preferably semi-crystalline, more preferentially based on a semi-crystalline polyamide, and in particular having a melting temperature Tm below 320°C, preferably Tm below 300°C, more preferentially Tm below 280°C, said matrix impregnating said fibrous reinforcement, said process being **characterized in that** it comprises:
a) a step of impregnating said dry fibrous reinforcement placed beforehand in said closed mold, by injection onto said reinforcement at an injection temperature T1 above the heat distortion temperature, HDT, of said composite material, measured according to standard ISO R 75 A, when its matrix consists of an amorphous polymer and T1 preferably being above the HDT +100°C, and in the case where the matrix of the composite consists of a semi-crystalline thermoplastic polymer, T1 being above the melting temperature Tm of said polymer, of a liquid reactive composition p), in the molten state, preferably having a viscosity at said injection temperature T1 less than 50 Pa.s, preferably less than 10 Pa.s, and more preferentially less than 5 Pa.s, said reactive composition p) being a precursor of said thermoplastic polymer, and being based on, or comprising, at least one reactive prepolymer of said thermoplastic polymer,
- and **in that** the regulating temperature T2 for said closed mold is maintained at a constant (isothermal) value during the molding, below the HDT of said composite material, when its matrix is amorphous, and when this matrix is semi-crystalline, said temperature T2 is between Tc and Tc -20°C, with Tc being the crystallization temperature of said matrix polymer, and preferably T2 being between Tc -5°C and Tc -15°C,
- and **in that** the internal surface of said mold is heated just before the injection of said reactive composition p) into said mold, at a temperature T3 between T1 -50°C and T1 +50°C,
- and **in that** said heating of the internal surface is carried out just before the injection of said reactive composition p), via a heating means which is external to the mold and removable,
and preferably,
- said external heating means using infrared or microwaves or being resistive or inductive and then being introduced into the mold in the open position, and then removed so as to allow the mold to be closed and said reactive composition p) to be injected,
- or (preferably) **in that** said external heating means is based on the blowing of a hot gas fluid, preferably of hot air, more preferentially of nitrogen or of another hot inert (non-oxidizing) gas, into said mold in the closed position, in particular the temperature of said hot gas fluid being in particular between T1 -50°C and T1 +50°C, and more particularly the injection time for said hot gas fluid being less than 30 s, preferably less than 10 s, and even more particularly with the time for maintaining said hot gas fluid in said mold being less than 1 minute, preferably less than 30 s, said mold then being purged of said hot gas fluid, before the introduction of said reactive composition p),
b) a step of at least partial polymerization of said reactive composition p) by polycondensation or by polyaddition as appropriate, and molding, with the polymerization step being simultaneous with the impregnating step a) and with said molding,
c) demolding of said part as soon as the temperature T4 of said part is equal to said temperature T2 for regulation using isothermal conditions of said mold, with the polymerization of said precursor composition p) being optionally partial,
d) optionally and if necessary, continuation of the polymerization of said part in a separate step outside the mold, by annealing in an oven, preferably at an annealing temperature Ta below the HDT of said material, for an amorphous (matrix) polymer and Ta being below the melting temperature Tm in the case of a semi-crystalline (matrix) polymer, and more particularly in the case of a semi-crystalline polymer, said temperature Ta being between Tm and Tm -30°C.

2. The process as claimed in claim 1, **characterized in that** said composition p) is defined according to the following options p1) and p2):
p1) a single-component precursor composition p11) or two-component precursor composition p12), said single-component composition p11) being based on a thermoplastic reactive prepolymer p11), which is preferably semi-crystalline and more preferentially a semi-crystalline polyamide reactive prepolymer, which is reactive with itself, preferably by polycondensation, and said two-component composition p12) being based on two thermoplastic reactive prepolymers p121) and p122), which are preferably semi-crystalline, more preferentially semi-crystalline polyamide reactive prepolymers, which are reactive with themselves, preferably by polycondensation or polyaddition,
p2) a two-component composition comprising a thermoplastic reactive prepolymer p21), which is preferably semi-crystalline, more preferentially a semi-crystalline polyamide reactive prepolymer, and a nonpolymeric chain extender p22) bearing groups which are reactive with those of said prepolymer p21), and with p21) and p22) being reactive by polyaddition reaction.

3. The process as claimed in claim 1 or 2, **characterized in that** it is an RTM (resin transfer molding) or injection/compression molding or S-RIM (Structural Reaction Injection Molding) process.

4. The process as claimed in one of claims 1 to 3, **characterized in that** said thermoplastic polymer of said matrix is semi-crystalline, preferably a semi-crystalline polyamide, as are said corresponding reactive prepolymers of the reactive composition p), with said injection temperature T1 of step a) being higher than said Tm of said thermoplastic polymer, preferably semi-crystalline polyamide.

5. The process as claimed in one of claims 1 to 4, **characterized in that** said polymerization in the mold in step b) is only partial and that a step of finishing the molded part by annealing outside the mold is carried out separately at a temperature Ta below said HDT of said composite material, for an amorphous polymer, and Ta below the melting temperature Tm of said thermoplastic polymer, when it is semi-crystalline, more particularly in the case of a semi-crystalline polymer, said temperature Ta being between Ta and Ta - 30°C.

6. The process as claimed in one of claims 1 to 5, **characterized in that** the difference between the injection temperature T1 of said composition p) and the internal surface (or wall) temperature of said mold is less than 40°C and preferably between 10 and 40°C.

7. The process as claimed in one of claims 1 to 6, **characterized in that** the overall degree of conversion of the reactive functions of said prepolymers in said reactive composition p), at the demolding c) is at least 50%, preferably at least 70%, with said conversion being only partial, in particular not exceeding 90%.

8. The process as claimed in one of claims 1 to 7, **characterized in that** the number-average molecular weight Mn (calculated from the quantitative determination of the functions) of said reactive prepolymers is in the range of from 500 to 10000, preferably from 1000 to 6000.

9. The process as claimed in one of claims 1 to 8, **characterized in that** the viscosity of said precursor composition p) under the impregnation conditions does not exceed 50 Pa.s, preferably does not exceed 10 Pa.s and more preferentially does not exceed 5 Pa.s.

10. The process as claimed in one of claims 1 to 9, **characterized in that** the glass transition temperature of the polymer of said thermoplastic matrix is at least 90°C, preferably at least 100°C and more preferentially at least 110°C and even more preferentially at least 120°C, and that the melting temperature Tm, in the case where said polymer is semi-crystalline, is below 300°C, preferably below 280°C.

11. The process as claimed in one of claims 1 to 10, **characterized in that** said precursor composition p) is as defined according to p1) while being a single-component composition based on a bifunctional reactive polyamide prepolymer p11) bearing on the same chain an amine end function and an acid (carboxy) end function, said polyamide prepolymer p11) preferably being semi-crystalline.

12. The process as claimed in one of claims 1 to 10, **characterized in that** said precursor composition is as defined according to p1) while being a two-component composition based on two polyamide prepolymers p12): a first bifunctional reactive polyamide prepolymer p121) bearing two identical amine or acid (carboxy) reactive functions X', and a second bifunctional reactive polyamide prepolymer p122) bearing two identical amine or acid (carboxy) functions Y', with the two functions X' and Y' being reactive with one another, said polyamide prepolymers p121) and p122) preferably being semi-crystalline.

13. The process as claimed in one of claims 1 to 10, **characterized in that** said precursor composition is as defined according to p2) while being a two-component composition comprising a bifunctional reactive polyamide prepolymer p21) bearing two identical amine or acid (carboxy) reactive functions X and a nonpolymeric chain extender p22), preferably having a molecular weight of less than 500 and in particular less than 400, said extender p22) bearing two identical reactive functions Y, with said functions X of said prepolymer p21) being reactive with said reactive functions Y of said extender p22) and said polyamide prepolymer p21) preferably being semi-crystalline.

14. The process as claimed in claim 13, **characterized in that** said function Y of said extender p22) is selected as follows according to X:
- when X is carboxy, Y is chosen from: oxazoline, oxazine, imidazoline, aziridine or epoxy;
- when X is amine, Y is chosen from: maleimide, epoxy, blocked isocyanate, oxazinone, oxazolinone, caprolactam or carboxylic anhydride (or carboxy).

15. The process as claimed in one of claims 1 to 14, **characterized in that** said fibrous reinforcement is based on long reinforcing fibers, in particular having an L/D aspect ratio or factor of greater than 1000, preferably greater than 2000.

16. The process as claimed in one of claims 1 to 15, **characterized in that** said part is a mechanical or structural, including semi-structural, in particular 3D, part.

17. The use of the process as defined in one of claims 1 to 12, in the manufacture of mechanical and structural parts, in particular for applications in the following fields, the motor vehicle industry, the railroad industry, the marine industry, wind power, sports, aeronautics and space, photovoltaics, the solar industry including parts for thermal solar heating or solar power stations, road transport (parts for trucks), the construction field, civil engineering, urban equipment and signage, panels, and leisure.
